Europäisches Patentamt

European Patent Office

Office européen des brevets

(11) Publication number: **0 382 059**
**A1**

# EUROPEAN PATENT APPLICATION

(21) Application number: **90101800.2**

(22) Date of filing: **30.01.90**

(51) Int. Cl.5: **F03G 3/00, F03G 7/10**

A request for correction of the drawings has been filed pursuant to Rule 88 EPC. A decision on the request will be taken during the proceedings before the Examining Division (Guidelines for Examination in the EPO, A-V, 2.2).

(30) Priority: **03.02.89 IT 1931489**

(43) Date of publication of application:
**16.08.90 Bulletin 90/33**

(84) Designated Contracting States:
**AT BE CH DE DK ES FR GB GR IT LI LU NL SE**

(71) Applicant: **Rebolini, Giorgio**
**Piazza Tevere, 16**
**I-20097 San Donato Milanese (Milano)(IT)**

(72) Inventor: **Rebolini, Giorgio**
**Piazza Tevere, 16**
**I-20097 San Donato Milanese (Milano)(IT)**

(74) Representative: **Bianchetti, Giuseppe**
**Studio Consulenza Brevettuale Via Rossini, 8**
**I-20122 Milan(IT)**

(54) **Recycled power rotative engine.**

(57) The invention is a recycled power rotative engine whose drive shaft (4) supports, on arms of equal lenght (10) and at equal angular distances, one or more auxiliary rotors, with half the axles parallel to the shaft and the other half bent towards it. Each pair of halves is held together by a central universal joint (11) and some levers (27) around the periphery of the joint. Each auxiliary rotor has two gears (13, 15) of different diameters which engage in their respective crown gears (7, 17), one of which is mobile. All the rotors are kinematically interconnected and engage the two crown gears so that shaft rotation occurs due to the effect of each rotor's movement which is approximately equivalent to the rolling on the internal crown gear surface so that the combination of the thrusting force of the mobile crown gear and the opposite force of the fixed crown gear causes each rotor to turn and translate with respect to the crown gears, causing the axial rotation of the drive shaft.

FIG.1

## RECYCLED POWER ROTATIVE ENGINE

This invention is a rotative engine, in particular a rotative engine which exploits the resolution of the forces which act on the auxiliary rotors with recycled forces, as will be described in detail below.

The purpose of the invention is to provide a simple, economical and ecological motor, which requires a minimum of maintenance and runs quietly.

### STATE OF THE ART

Engines such as explosion, electric, pneumatic, hydraulic, turbine and reaction types etc., use a continuous supply and resolution of the force created by the supply to produce dynamic energy.

These types of supplies have led to the research into new fuels such as petrol, diesel, methane, liquid gases and even nuclear energy up to a point where we risk exhausting world resources.

This invention, while respecting the two fundamentals of continuous power supply and the resolution of its force, gives a very advanced way of obtaining such results because it uses a method of recycling energy which in this case is man-made and as such is easily available and completely free of costs.

This construction method gives several benefits: easy construction, maintenance and use to obtain a new source of inexhaustable clean energy which is free and non-polluting.

What follows is a detailed description of the invention, given as a non-binding example, with particular reference to the attached diagrams:

- figure 1, longitudinal section of the engine;
- figure 2, a section of figure 1;
- figure 3, the head of the levers and equalisers;

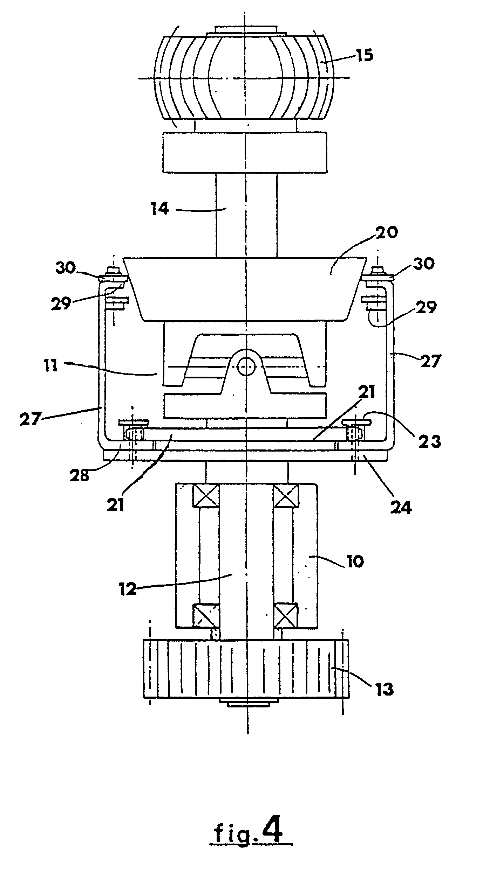

- figure 4, view of a rotor;
- figure 5, diagram of the forces on a plane orthogonal to the axis of the engine.
- figure 6, diagram of the forces corresponding the axis of one of the rotors.

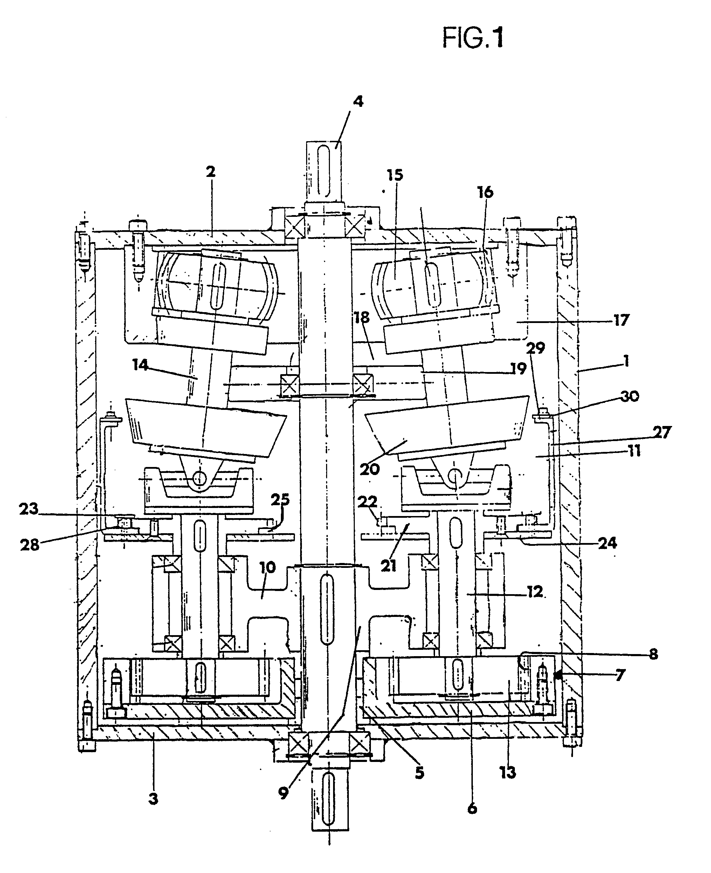

With reference to fig. 1 the engine of the invention includes a substantially cylindrical casing with a side wall, 1 and head walls, 2 and 3.

The drive shaft, 4, is mounted on walls 2 and 3 by means of bearings.

A bush, 5, is fixed on the cover, 3 and on this a plate, 6, is mounted which can thus rotate around the drive shaft.

Fixed to the perimeter of the plate 6, is a crown gear, 7 with internal toothing 8.

Also fixed to the shaft, 1, by means of a key or similar tool, is a support, 9, with a couple of arms, 10. Mounted on each of these arms, by means of bearings, is a rotor, consisting of two parts interconnected by a universal joint, 11.

The lower part of each rotor has a shaft, 12, mounted on the arm 10 of the support, 9, with a gear wheel, 13, at the bottom of the shaft which engages with the toothing, 8, of the crown gear, 7.

The upper part of each rotor has a shaft, 14, where a second gear wheel, 15, with crown gear hobbing is mounted. This engages the internal toothing, 16, of a crown gear, 17, in turn fixed to the upper cover, 2.

The internal diameter of the crown gear, 17, is less than the internal diameter of the crown gear, 7. The ratio of the number of teeth of the gears, 13, and that of the crown gear, 7, is equal to the ratio between the number of teeth of the gears, 15, and that of the crown gear, 17. Therefore both crown-gear units can move at the same rate, since they have the same ratios.

On the top of the shaft, 4, there is a roller, 18, mounted by means of a bearing. This roller has a surface, 19, slightly inclined, and the upper semi-shafts, 14, of each rotor rest on this.

The inclination of this roller's surface, 19, perfectly matches the surface of the shaft, 14, which is consequently in direct contact with the roller.

Each semi-shaft, 14, has attached at the base, truncated cone disc, 20, immediately above the universal joint, 11.

Each semi-shaft, 12, has attached to the top a gear wheel, 21, with toothing, 22, which engages a chain, 23, connecting it to the gear wheels, 21.

Below each of these wheels a disc, 24, is fixed. The thickness of the toothing, 22, is less than the thickness of the respective wheels, 21, in order to leave, between each toothing and the disc below, 24, a gap, 25.

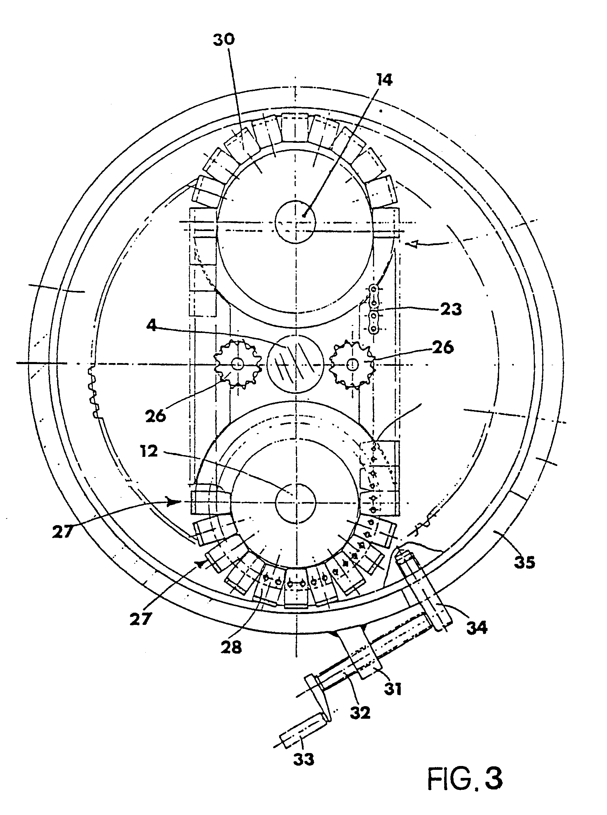

The design includes (fig. 3) a couple of idlers, 26, for the chain, 23.

Each link in the chain has attached to it an L-shaped part, or lever 27, whose lower edge, 28, enters the seatings, 25 when the lever passes the gear wheel. The upper edge, 29, which has an adjustable rotating rocking lever, 30, attached to it, contacts and engages with the lateral surface of the truncated cone disc, 20, to guide the upper semi-shaf, 14, always keeping it positioned at the angle needed to allow the rotor to turn freely.

There are also a couple of guides, 3C, below the chain opposite the shaft, 4.

The levers, 27, are situated on the chain very close together and fixed with a couple of pins to prevent their rotation.

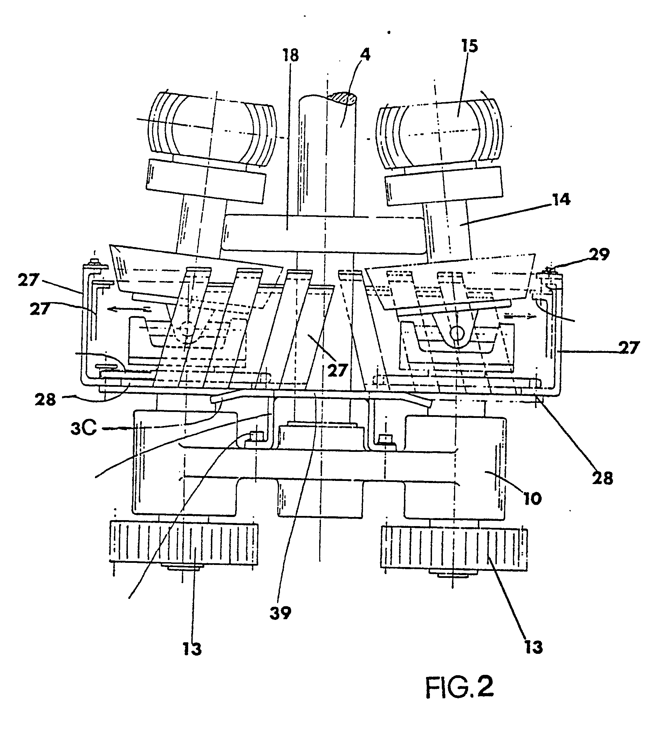

To allow the levers to enter seatings in the gear wheels, 21, the lower ends, 28, are bevelled inwards. For the same reason the levers are placed in alternate pairs of different lenght so that the heads, 29, whith the rocking levers, 30, have an alternating difference in height (fig. 2) to allow a partial overlap in the curve as illustrated by fig. 3.

In such a layout, when the levers pass through the gear wheels, 21, they are extremely stable since each end enters the corresponding seating, 25, which prevents vibrations, so that the upper rocking lever engages and presses tightly against the side wall of the truncated cone element, 20.

In this way the upper part of each rotor is guided precisely, since the respective semi-shaft, 14, rests inside against the surface, 19, of the roller, 18, while it is laterally guided by the thrust from the rocking levers, 30, against the truncated cone disc, 20.

The wall, 1, of the engine has attached to it (fig. 3) the support, 31, of a threaded shaft, 32, whose rotation is started by a crank, 33, or similar instrument, and which operates on a pin, 34, fixed to the crown gear, 7, which is integral to the rotating plate, 6.

The pin, 34, can slide into a slit, 35, on the engine wall, 1.

The engine works as follows:
by turning the crank, 33, the shaft, 32, rotates on its own axis, generates a thrust which partly discharges on the pin, 34, and partly, by reaction, on the engine casing.

This thrust is transmitted by the pin, 34, to the ring gear, 7, integral to the rotating plate, 6.

Via the toothing, 8, the force, from the crown gear, 7, is discharged on the gears, 13, of both rotors and then through the shaft, 12, the universal joint, 11, and the shaft, 14, onto the upper convex gears, 15, which in turn engage the crown gear 16, integral to the upper engine cover.

These two forces with different directions act on the auxiliary rotors: one, on the lower gear, 13, which originates on a cylindrical surface and the other, the upper gear, 15, which originates on a conical surface whose inclination is a function of the difference between the diameters of the crown gears, 7 and 17, and the diameters of the gears, 13 and 15. Both of these forces discharge on the levers, 27, and converge in a point where they resolve in several directions (F1-F2) and $(F'_1-F'_2)$ giving rise to the motive power (F3 and $F'_3$). The intensity of the motive power depends on the following parameters:
- difference between the diameter of the lower gear, 13, and that of the upper convex gear, 15;
- difference between the diameters of the crown gears, 7 and 17;

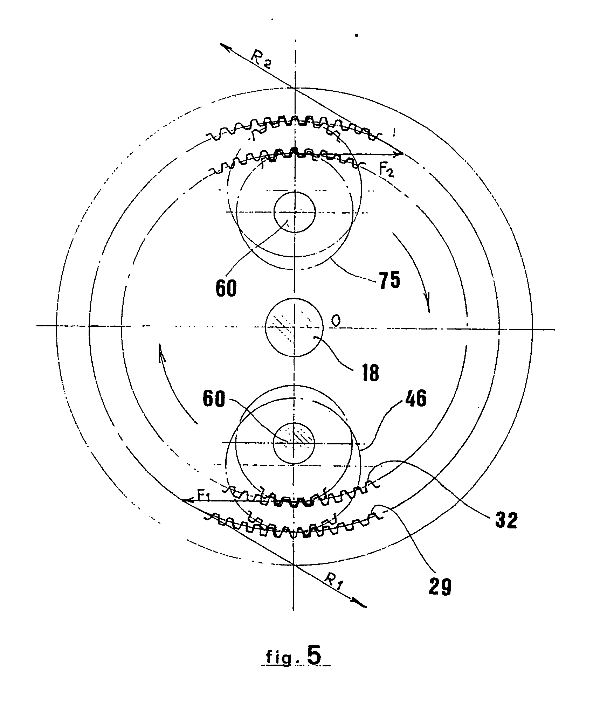

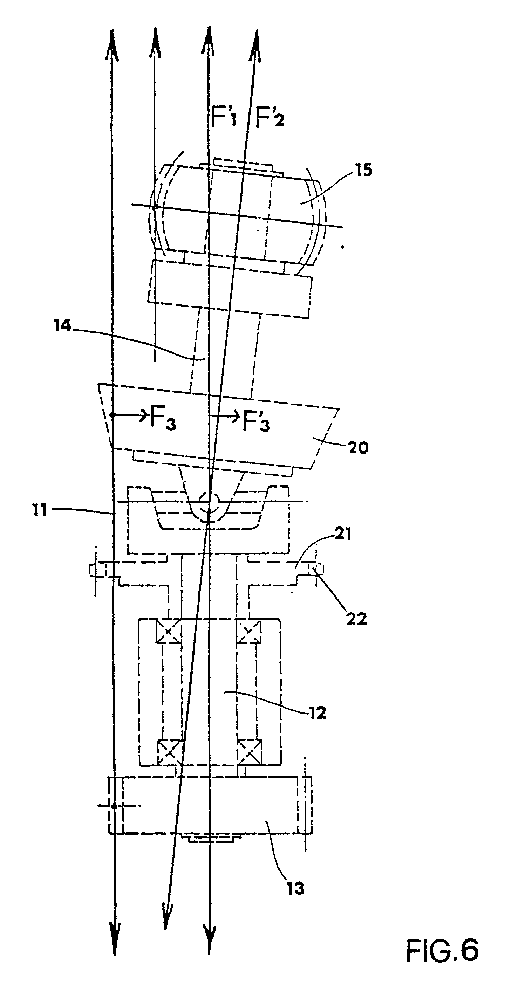

- difference between the directions of the forces at their intersection on the lever, 27;
- distance between the intersection between the toothing of the spur gear, 13, and the crown gear, 7, (equal to the distance that the levers, 27, project from the gears, 13). These differences create a double resolution of the forces as can be seen in figures 5 and 6.

The momentum caused by the force generated on the cylindrical surface and that generated on the conical surface, turns the auxiliary rotors, and during this movement the initial dynamic conditions of the system are gradually reattained. While the conical surface moves, the axis of the convex gears maintains its inclination constant with respect to the axis of the lower spur gear.

Thus opposite forces continue to be generated in a point of the surface tangential to the rotors, maintaining constant the initial thrust on the rotors provided but the engine's start and creating, due to the fact that a constant force is applied, a progressive increase in the engine's speed.

The constant inclination of the upper shaft, 14, is maintained by the action of the levers, 27, pulled by the chain, 23. The action of each lever on the shaft, 14, occurs after the relative and has entered the groove, 25, between the toothed wheels, 21, and the discs, 24, underneath.

In the example described there are only two auxiliary rotors but obviously a greater number of arms, 10, can be fixed to the support, 9, each with a rotor to increase the engine power.

The other parameters, such as the inclination of the upper semi-shafts, 14, the dimensions of the various gears, the nature of the tension applied (mechanical, pneumatic, hydraulic and the like) could also vary and still be included within the scope of this application.

An expert in the field may make many modifications and variations which, however, are all deemed to be included in this invention.

## Claims

1. Recycled power rotative engine characterized by a drive shaft which supports, on arms of equal lenght and angular distance, one or more auxiliary rotors with axes parallel to the shaft up to halfway and for the other half inclined towards it and held together by a central joint and by levers around the periphery of the joint, each auxiliary rotor having two gears of different diameters which engage the respective crown gears, one of which is mobile, all the rotors being kinematically interconnected and engaging the two crown gears so that the rotation of the shaft occurs as an effect of the motion of each rotor, approximately equivalent to the rolling on the internal surface of the crown gears so that the combined action of the thrusting force of the mobile crown gear and the opposite force of the fixed crown gear causes, each rotor, to rotate on itself and translate with respect to the crown gears, causing the axial rotation of the drive shaft.

2. Recycled power rotative engine as in claim 1 in which the resolution of the forces on the auxiliary rotor is created and these forces are recycled on the crown gears to obtain a constant rotation thrust over an unlimited period equal to the duration of the engine itself.

3. Recycled power engine as in claims 1 and 2 where the tension of the force between the two crown gears is continuously recycled on each single tooth of the crown gear, without ever consuming it and thus obtaining dynamic energy production for the engine's life.

4. Recycled power rotative engine as in claims 1, 2 and 3, where the auxiliary rotor, while receiving two opposite forces, turns on only one side, forcing the small gear to turn backwards, allowing the auxialiry rotor to be kept under tension on the entire circumference of the crown gears by using a static force applied between them.

5. Recycled power rotative engine as in claims 1, 2, 3 and 4, where the difference in diameter between the gears of the auxiliary rotors, the difference in diameter between the two crown gears, the difference between the directions of the forces at their intersection on the lever and the distance between the intersection of the forces and the engagement point of gears and crown gears, all create a double resolution of the forces on the auxiliary rotor.

6. Recycled power rotative engine as in claim 1 where the ratio of each pinion gear mounted on the auxiliary rotors and the one of the mounted on the auxiliary rotors to move simultaneously and with the same advamcement with respect to the spoke of the central rotor.

7. Recycled power rotative engine as in the previous claims, characterized in that near the joint of the auxiliary rotors there are has several levers to transmit the forces from one half rotor to the other half and then from one crown gear to the other, to resolve these forces on the auxiliary rotors and make them turn.

8. Recycled power rotative engine as in claim 7, where the levers are fixed to a chain or a belt pulled by a pair of gear wheels mounted on the auxiliary rotors, with a gap where the ends of the levers enter as they pass the rotors, said levers also having a rotating, adjustable rocking lever, which keeps the levers against the surface of a toothed conical element fixed to the inclined part of the auxiliary rotors, and allows the forces to be translated from one crown gear to another.

9. Recycled power rotative engine according to claim 7 and 8 wherein the levers 27 can be substituted by a cylinder fix-mounted on the cylindrical rotor and directly supporting the equalizers 30 thus eliminating the guides, the chain and the gear wheels thereof.

10. Recycled power rotative engine wherein the tension is applied mechanically, pneumatically or hydraulically.

FIG.1

FIG.2

FIG.3

fig.4

fig. 5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2587764 (HOMO)<br>* abstract; figure 2 *<br>* page 1, line 1 - page 3, line 6 * | 1 | F03G3/00<br>F03G7/10 |
| A | PATENT ABSTRACTS OF JAPAN<br>vol. 8, no. 90 (M-292)(1527) 25 April 1984,<br>& JP-A-59 5889 (RIYUUICHI SATOU) 12 January 1984,<br>* the whole document * | 1 | |
| A | PATENT ABSTRACTS OF JAPAN<br>vol. 11, no. 105 (M-577)(2552) 03 April 1987,<br>& JP-A-61 252874 (RYOJI SHIMOZAWA) 10 November 1986,<br>* the whole document * | 1 | |
| A | FR-A-973702 (CHAPEY) | | |

TECHNICAL FIELDS SEARCHED (Int. Cl.5 )

F03G
F16H

The present search report has been drawn up for all claims

| Place of search | Date of completion of the search | Examiner |
|---|---|---|
| THE HAGUE | 12 JUNE 1990 | JORIS J.C. |

EPO FORM 1503 03.82 (P0401)